(19) Europäisches Patentamt
European Patent Office
Office européen des brevets

(11) **EP 4 328 654 A1**

(12) **EUROPEAN PATENT APPLICATION**
published in accordance with Art. 153(4) EPC

(43) Date of publication:
**28.02.2024 Bulletin 2024/09**

(21) Application number: **22816169.1**

(22) Date of filing: **01.06.2022**

(51) International Patent Classification (IPC):
*G02B 27/01* (2006.01)   *B60K 35/00* (2024.01)
*G02B 30/35* (2020.01)   *G02B 30/60* (2020.01)
*H04N 13/346* (2018.01)   *H04N 13/363* (2018.01)
*H04N 13/383* (2018.01)

(52) Cooperative Patent Classification (CPC):
**B60K 35/00; G02B 27/01; G02B 30/35;
G02B 30/60; H04N 13/346; H04N 13/363;
H04N 13/383**

(86) International application number:
**PCT/JP2022/022391**

(87) International publication number:
**WO 2022/255424 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.06.2021 JP 2021093127**

(71) Applicant: **Kyocera Corporation
Kyoto-shi Kyoto 612-8501 (JP)**

(72) Inventors:
• **SHINTANI, Takeshi
Kyoto-shi, Kyoto 612-8501 (JP)**
• **SADAMOTO, Hiromichi
Kyoto-shi, Kyoto 612-8501 (JP)**
• **NAKAJIMA, Yasushi
Kyoto-shi, Kyoto 612-8501 (JP)**
• **INAMI, Masahiko
Tokyo 151-0051 (JP)**

(74) Representative: **Viering, Jentschura & Partner
mbB
Patent- und Rechtsanwälte
Am Brauhaus 8
01099 Dresden (DE)**

(54) **VIDEO DISPLAY DEVICE**

(57)   The coordinates of a gaze point of an observer viewing an object outside a vehicle are detected using an output from an interior camera. A two-dimensional aerial image forms at a position corresponding to the gaze point in outside image data. The aerial image is displayed on a luminous display surface and appears with an optical system that can change a display position in the air in the depth direction. When the aerial image is viewable by the observer, the gaze point is at a position at which image data projected on a retroreflective screen can be perceived as a stereoscopic image.

FIG. 2

**Description**

TECHNICAL FIELD

The present disclosure relates to an image display device that can navigate, for example, a gaze point of the left and right eyes of an observer such as a vehicle driver to an appropriate position for perception of a projected image as a stereoscopic image.

BACKGROUND OF INVENTION

Known techniques are described in, for example, Patent Literature 1 and Patent Literature 2.

CITATION LIST

PATENT LITERATURE

Patent Literature 1: Japanese Unexamined Patent Application Publication No. 2001-42251

Patent Literature 2: Japanese Unexamined Patent Application Publication No. 2006-44596

SUMMARY

In an aspect of the present disclosure, an image display device includes an exterior imager that images surroundings of a vehicle, a gaze point detector that detects a position of a gaze point of an observer seated on a seat in the vehicle, a screen on a shielding portion in the vehicle blocking an outside view of the observer, a projector that projects a stereoscopic image onto the screen, a first data generator that generates first image data, a second data generator that generates second image data based on data output from the exterior imager, a switcher that switches data to be projected onto the screen between the first image data and the second image data, and an aerial image generator storing image data of a predetermined aerial image and operable in response to an output from the switcher. With the switcher causing the first image data to be projected onto the screen, the aerial image generator causes an aerial image to appear at a position of a predetermined gaze point. With the second image data being projected onto the screen, the aerial image generator causes an aerial image to appear at a position corresponding to the gaze point detected by the gaze point detector and allows the observer to view an image of the second image data.

BRIEF DESCRIPTION OF THE DRAWINGS

FIG. 1 is a schematic diagram of an image display device 1 according to an embodiment of the present disclosure including a stereoscopic image display device 2 for stereoscopically displaying instrument items that are predetermined image data and an interior aerial image display device 3 for stereoscopically displaying an aerial image M1 inside a vehicle.
FIG. 2 is a schematic diagram of the image display device 1 according to the embodiment of the present disclosure including the stereoscopic image display device 2 for stereoscopically displaying scenes outside the vehicle and an exterior aerial image display device 4 for stereoscopically displaying an aerial image M2 outside the vehicle.
FIG. 3 is a simplified plan view of a vehicle 10.
FIG. 4 is a simplified side view of the vehicle 10.
FIG. 5 is a simplified horizontal cross-sectional view of an observer 5 in the vehicle 10, a retroreflective screen 21 in front of the observer 5, and projectors 22L and 22R.
FIG. 6 is an enlarged partial cross-sectional view of the retroreflective screen 21.
FIG. 7 is a simplified horizontal cross-sectional view of the stereoscopic image display device 2 including the projectors 22L and 22R projecting image data of instrument items onto the retroreflective screen 21 and the observer 5 observing the projected image data and the aerial image M1 from the interior aerial image display device 3.
FIG. 8 is a simplified horizontal cross-sectional view of the stereoscopic image display device 2 including the projectors 22L and 22R projecting see-through image data onto the retroreflective screen 21 and the observer 5 observing the projected see-through image data and the aerial image M2 from the exterior aerial image display device 4.

FIG. 9 is a simplified horizontal cross-sectional view of the stereoscopic image display device 2 including the projectors 22L and 22R projecting image data onto the retroreflective screen 21 and the observer 5 viewing no stereoscopic image.

FIG. 10 is a perspective view of the retroreflective screen 21 on a dashboard 11 in the vehicle 10 with image data 15 of instrument items being projected and displayed stereoscopically.

FIG. 11 is a perspective view of the retroreflective screen 21 on the dashboard 11 in the vehicle 10 with see-through image data being projected and displayed stereoscopically.

FIG. 12 is an electrical block diagram of the structure according to an embodiment of the present disclosure.

FIG. 13 is a flowchart of the operation performed by a processor 81 in a display controller 75.

FIG. 14 is a flowchart of the operation performed by the processor 81 in the display controller 75 further describing a part of the operation in step s4 in FIG. 13.

FIG. 15 is a flowchart of the operation performed by the processor 81 in the display controller 75 further describing a part of the operation in step s8 in FIG. 13.

FIG. 16 is a flowchart of the operation performed by a processor 80 in a second data generator 77 to determine, through computation, the coordinates of the position of aerial image M2 formation when generating see-through image data having parallax for both the left and right eyes.

FIG. 17 is a simplified plan view describing positions on the retroreflective screen 21 onto which left see-through image data and right see-through image data with parallax are projected.

FIG. 18 is a simplified plan view of imaginary reference planes 100A to 100C for determining, through computation, the coordinates of the position of aerial image M2 formation in one or more embodiments of the present disclosure.

FIG. 19 is a simplified plan view describing the operation performed by the second data generator 77 that sets the coordinates of the position of aerial image M2 formation.

FIG. 20 is a plan view describing conditions to define an area in an XY plane corresponding to an appropriate range 111.

FIG. 21 is a plan view describing conditions to define an area in a YZ plane corresponding to the appropriate range 111.

FIG. 22 is a schematic view of an image display device 7 according to another embodiment of the present disclosure.


DESCRIPTION OF EMBODIMENTS

The objects, features, and advantages of the present disclosure will become more apparent from the following detailed description and the drawings.

Recent image display devices use a transparency technique for imaging scenes outside a vehicle with an exterior camera, projecting an image of the imaged outside scenes onto a retroreflective screen mounted on a shielding portion such as a dashboard or a side pillar that is a blind spot in the vehicle, and allowing an observer to perceive the projected image as outside being seen through the shielding portion. An image display device with such a known technique includes a projector at a position conjugate with a viewpoint of an observer and allows the left eye and the right eye of the observer to simultaneously collect light from two different images that are a left-eye image and a right-eye image having parallax between them and to perceive the two different images with parallax as a stereoscopic image with a sense of depth (refer to, for example, Patent Literatures 1 and 2).

The structure with a known technique described in Patent Literature 1 includes a retroreflective screen, a display means for displaying an image, a projection optical system, and an enlargement means such as a diffraction element. The projection optical system projects light from the display means and forms an enlarged image of an image displayed by the display means on a screen. The enlargement means is adjacent to the screen between the projection optical system and the screen. The enlargement means transmits light from the projection optical system and also enlarges light beams from multiple points in the display means included in the light from the projection optical system in two directions orthogonal to each other with different enlargement scales.

The structure with a known technique described in Patent Literature 2 includes an exterior camera, a viewpoint recognition means, an image generation means, and an organic electroluminescent (EL) display. The exterior camera images the surroundings of a vehicle. The viewpoint recognition means recognizes the spacial position of a viewpoint of a driver seated on the driver's seat. The image generation means generates images of outside scenes to be perceived by the eyes of the driver through transparent shielding portions by processing image data of the surroundings obtained by the exterior camera based on recognition results from the viewpoint recognition means. The shielding portions are, for example, a side pillar, a door, and a dashboard blocking a view of the driver. The organic EL display displays a two-dimensional (2D) image generated by the image generation means at the positions of the shielding portions.

The structure with the known technique described in Patent Literature 1 allows perception of a stereoscopic image using the retroreflective screen simply when a line of sight of an observer, or in other words, a visual axis, aligns in the same direction as the projection direction and an optically conjugate relationship is satisfied. Thus, the head of the observer, or in other words, the gaze point, is to be navigated accurately to a position at which a stereoscopic image can be appropriately perceived. Navigation with sound such as a voice may not achieve such accurate navigation to an appropriate position. An image display device has been awaited to achieve navigation of a gaze point of the observer to a position at which a projected image can be perceived as a stereoscopic image, without upsizing or complicating the device.

In the structure with the known technique described in Patent Literature 2, an image on the display includes no information about the depth direction. Thus, the displayed image provides no sense of distance. The distance to an outside object blocked by a shielding portion may be perceived inaccurately. Additionally, a driver with an inappropriate gaze point views an image displayed at the position of the shielding portion as being disconnected from scenes viewed through, for example, a windshield that is a windscreen. Thus, the image may be insufficient for the driver to accurately recognize outside objects.

An image display device according to one or more embodiments of the present disclosure will now be described with reference to the accompanying drawings.

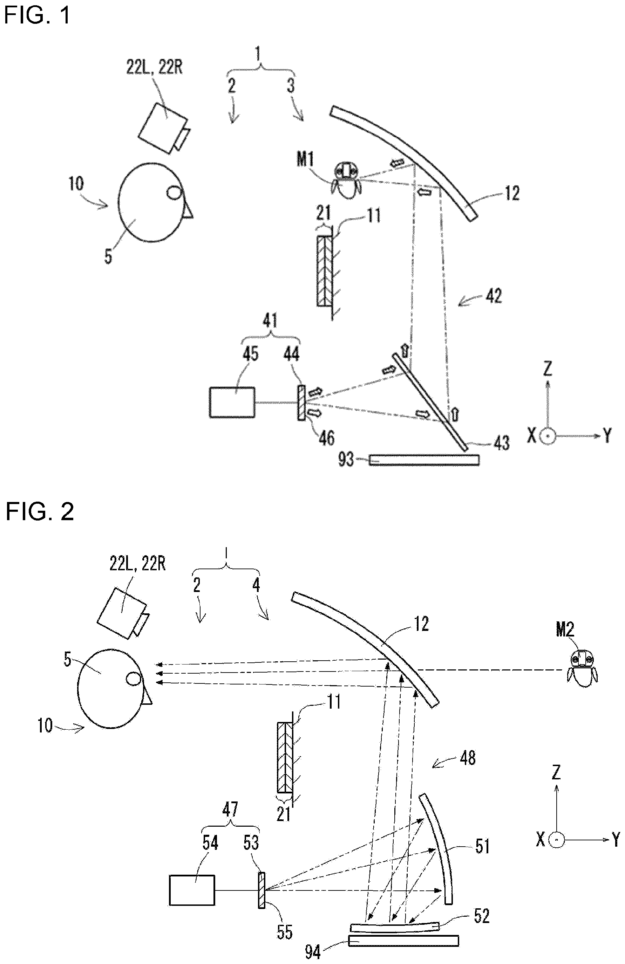

FIG. 1 is a schematic diagram of an image display device 1 according to an embodiment of the present disclosure including a stereoscopic image display device 2 for stereoscopically displaying instrument items as predetermined image data and an interior aerial image display device 3 for stereoscopically displaying an aerial image M1 inside a vehicle. FIG. 2 is a schematic diagram of the image display device 1 according to the embodiment of the present disclosure including the stereoscopic image display device 2 for stereoscopically displaying scenes outside the vehicle and an exterior aerial image display device 4 for stereoscopically displaying an aerial image M2 outside the vehicle. The image display device 1 according to the present embodiment is mounted on a vehicle 10 and displays an image for an observer 5 in the vehicle 10, or for example, a driver in particular. The instrument items include, for example, a console for displaying the traveling speed of the vehicle 10, the rotational speed of an internal combustion engine, or other readings.

In the stereoscopic image display device 2, projectors 22L and 22R located based on the left and right eyes project image data for allowing the observer 5 to perceive a stereoscopic image on a retroreflective screen 21 on a dashboard 11 in the vehicle 10. The components are collectively denoted by the reference numerals simply using numbers without the letters L or R. The dashboard 11 is a panel in front of the observer 5 and is located below a transparent windshield 12 and facing inside the vehicle. The windshield 12 may be a transparent windscreen for common vehicles, may include a transparent wedge-shaped interlayer between its glass layers to allow the observer 5 to view no double images with misalignment between light reflected from an internal surface and light reflected from an external surface, or may include an internal or external surface coated with an antireflective coating film to cause no reflection on the coated surface.

With reference to FIG. 1, the interior aerial image display device 3 includes a display 41 and an aerial optical coupling element 43 included in an optical system 42 together with the windshield 12. The display 41 in FIG. 1 is a projector including, for example, a transmissive liquid crystal display element 44 and an illuminator 45 and includes a luminous display surface 46. In the stereoscopic image display device 2 for stereoscopically displaying instrument items being predetermined image data, the transmissive liquid crystal display element 44 displays image data of an aerial image M1. The illuminator 45 illuminates the liquid crystal display elements 44 from behind. The display 41 including the luminous display surface 46 may be, for example, an EL display or a display element such as a light-emitting diode with a light-emitting function. The image data for the aerial image M1 on the luminous display surface 46 travels from an input end (left in FIG. 1) to an output end (upward in FIG. 1) in the aerial optical coupling element 43 and is reflected from a concave surface of the windshield 12 facing inside the vehicle. The optical system 42 forms, at a predetermined position, a real image of the aerial image M1, which is viewable by the observer 5. The predetermined position for forming the aerial image M1 corresponds to the position of a predetermined gaze point of the observer 5 and allows the observer 5 to view a stereoscopic image of instrument items. An imaging position for the aerial image M1 may be set based on the arrangement among components including the luminous display surface 46, the aerial optical coupling element 43, and the concave reflective surface of the windshield 12. The components including the components 46 and 43 can be moved by a drive 93 and relocated at predetermined positions in Y-direction that is the depth direction. In one or more embodiments of the present disclosure, the vehicle 10 includes, in front of a driver's seat 13, the transparent windshield 12 with a concave surface facing inside the vehicle. The aerial image display device 3 includes the display 41 including the luminous display surface 46 and the aerial optical coupling element 43 as described above. The luminous display surface 46 displays image data of the aerial image M1 from a first data generator 71 when the projectors 22L and 22R project instrument items. The aerial optical coupling element 43 causes the image displayed on the luminous display surface 46 to be reflected from the concave surface of the windshield 12 to form an image as a real image viewable by the observer 5.

The aerial optical coupling element 43 is, for example, an optical element that bends light beams of light traveling through an element surface as a single plane and includes multiple optical element units that each function as a dihedral corner reflector for reflecting light with two mutually perpendicular mirror surfaces perpendicular to the element surface. When light beams from the input end through the element surface travel through the optical element units, the two mirror surfaces in each optical element unit each reflect the light beam once, or two times in total. An image of the luminous display surface then forms at a position plane symmetric to the position of the luminous display surface with respect to the element surface. The image formed after being reflected two times can be observed from a viewpoint that forms an oblique angle with respect to the element surface. Each optical element unit is, for example, a thin flat plate with sides with a length of 100 μm and a thickness of 100 μm. A base of 5 cm square includes, for example, tens or hundreds of thousands of such optical element units.

With reference to FIG. 2, the exterior aerial image display device 4 includes the display 41 and two concave mirrors 51 and 52 included in an optical system 48 with the windshield 12. The display 41 in FIG. 2 is a projector including, for example, a liquid crystal display element 53 and an illuminator 54. The display 41 includes a luminous display surface 55. In the stereoscopic image display device 2 for stereoscopically displaying see-through image data, the liquid crystal display element 53 displays image data of an aerial image M2. The illuminator 54 illuminates the liquid crystal display element 43 from behind. This display is similar to the display 41 in FIG. 1 described above. The image data for the aerial image M2 on the luminous display surface 55 travels through the concave mirrors 51 and 52, is reflected from the concave surface of the windshield 12 facing inside the vehicle, and is displayed as viewable by the observer 5. The optical system 48 forms a virtual image of the aerial image M2 at a position outside the vehicle across the windshield 12, corresponds to a detected gaze point of the observer 5, and allows the observer 5 to view a stereoscopic image of the see-through image data. The observer 5 can thus view the aerial image M2. The position for forming the aerial image M2 may be set based on the arrangement among components including the luminous display surface 55, the concave mirrors 51 and 52, and the concave reflective surface of the windshield 12. The components including the luminous display surface 55 may be moved by a drive 94 and relocated in Y-direction that is the depth direction. In one or more embodiments of the present disclosure, the vehicle 10 includes, in front of the driver's seat 13, the transparent windshield 12 including a concave surface facing inside the vehicle. The exterior aerial image display device 4 includes the display 41 including the luminous display surface 55 and the concave mirrors 51 and 52. The luminous display surface 55 displays an image of the aerial image M2 when the projectors 22L and 22R project see-through image data. The image displayed on the luminous display surface 55 is reflected from the concave mirrors 51 and 52 and the concave surface of the windshield 12 and form as a virtual image viewable by the observer 5.

The aerial images M1 and M2 may be, for example, figures, symbols, characters such as letters, or identical 2D images, and have limited viewing angles.

The structure according to one or more embodiments of the present disclosure allows the observer 5 to view the aerial image M1 or M2. Thus, (1) a viewpoint, or in other words, the head of the observer 5, is easily positioned within a particular range for successful perception of a stereoscopic image, and (2) a gaze point of the observer, or in other words, the focal point on the retina of each of the left and right eyes of the observer 5, is easily shifted to a position appropriate for viewing a stereoscopic image. The observer 5 thus easily perceives different images with parallax as a stereoscopic image with a sense of depth. In one or more embodiments of the present disclosure, the position of a gaze point of the observer 5 described above includes a position associated with a gaze point and is defined to include, for example, the position of a viewpoint or the head of the observer 5, a middle position of the left and right eyes, and the direction of a line of sight as well, and may be expressed with three-dimensional (3D) or horizontal 2D coordinates. In one or more embodiments of the present disclosure, outside image data to be perceived as being seen through is a stereoscopic image with parallax. For such a stereoscopic image, the position for the observer 5 to adjust the gaze point, or in other words, the focal point, is determined based on a parallax amount between the left and right eyes. Display positions for the aerial images M1 and M2 are set based on parallax amount information determined during generation of see-through images. The same applies to instrument items displayed on the retroreflective screen 21 on the dashboard 11. Display positions for the aerial images M1 and M2 are set based on the parallax amount information.

In this manner, the projection technique including the retroreflective screen 21 on, for example, the dashboard 11 as a shielding portion in one or more embodiments of the present disclosure and the projectors 22 can display a stereoscopic image to show an image with depth information. Thus, an image with a sense of depth and connected integrally to the outside scenes can be generated on the retroreflective screen 21 on the dashboard 11. The distances to objects can also be sensed through the display. The stereoscopic image can be easily perceived using the aerial images M1 and M2 to navigate a gaze point.

In the image display device 1, the observer 5 gazing at a gaze point at which projection image data can be perceived as a stereoscopic image can view the aerial image M1 or M2, and the observer 5 gazing at a gaze point at which projection image data cannot be perceived as a stereoscopic image can view no aerial image M1 or M2. Thus, the observer 5 can easily recognize whether a gaze point is at a position appropriate for viewing a stereoscopic image based on whether the aerial image M1 or M2 is viewable. This allows indirect navigation of the gaze point of the observer 5 to an appropriate position for perception of a stereoscopic image without upsizing or complicating the device.

The aerial images M1 and M2 appear or do not appear without any switching operation. Thus, the observer 5 as a driver of the vehicle 10 can easily and reliably perceive outside scenes blocked by a shielding portion such as the dashboard 11 as a stereoscopic image projected on the retroreflective screen without compromising driving safety. Such a virtually transparent shielding portion can contribute to increasing driving safety.

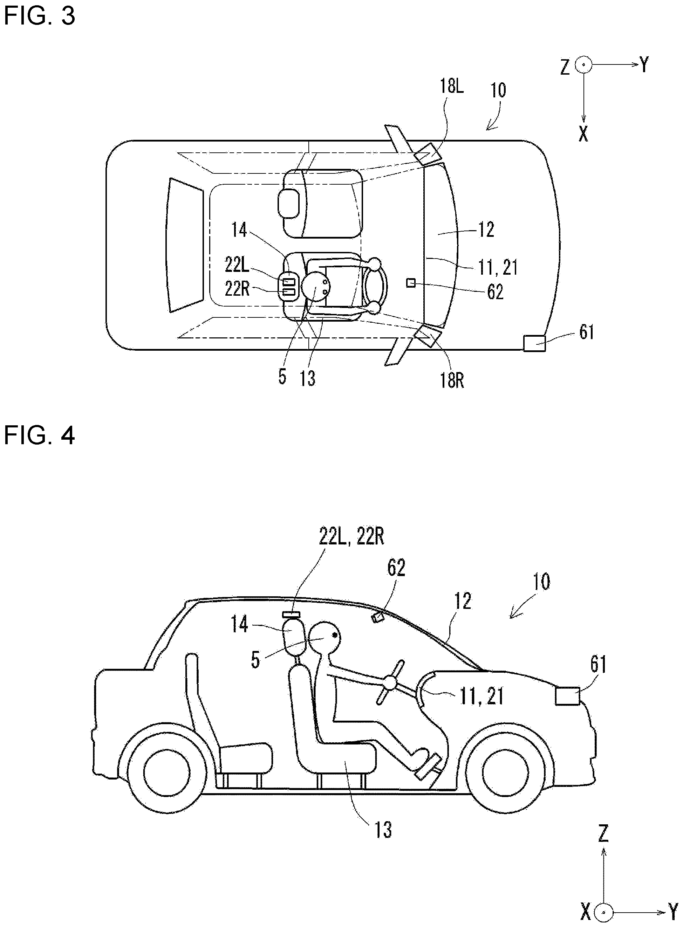

FIG. 3 is a simplified plan view of the vehicle 10. FIG. 4 is a simplified side view of the vehicle 10. The observer 5 is seated on the driver's seat 13. The projectors 22L and 22R are located above the driver's seat 13, or for example, on a headrest 14 above the backrest of the driver's seat 13. The projectors 22L and 22R respectively correspond to the left eye and the right eye of the observer 5.

The vehicle 10 includes an exterior camera 61 as an exterior imager on its front portion. The exterior camera 61 images scenes around the vehicle 10, or in particular, scenes in front of the vehicle 10 viewable by the observer 5 through the windshield 12 and an outside view directly unviewable to the observer 5 due to the dashboard 11 blocking the view. The outside view is imaged as connected to the scenes ahead. The exterior camera 61 outputs image data with binocular parallax for a binocular stereoscopic view based on the left and right eyes of the observer 5 and may be, for example, a stereo camera. The exterior camera 61 may be a camera that outputs a single set of image data. In this case, image data with binocular parallax is obtained based on the single set of single image data through computation.

An interior camera 62 is located on, for example, the ceiling in the vehicle 10 to image the face of the observer 5 from in front of the observer 5 or nearby. With an output from the interior camera 62, eye tracking information about the observer 5 such as a gaze point, a viewpoint, or a line of sight can be detected through computation. A viewpoint corresponds to the center of a crystalline lens facing outward in an opening defined by an iris, or may be the position of the head or the middle position of the left and right eyes. A line of sight, also referred to as the visual axis, is a straight line passing through the center of a crystalline lens facing outward from an opening defined by an iris and the central fovea with the highest visual acuity. A gaze point is an intersection on an imaginary plane including lines of sight of the left eye and the right eye. The exterior camera 61 and the interior camera 62 use the same coordinate system.

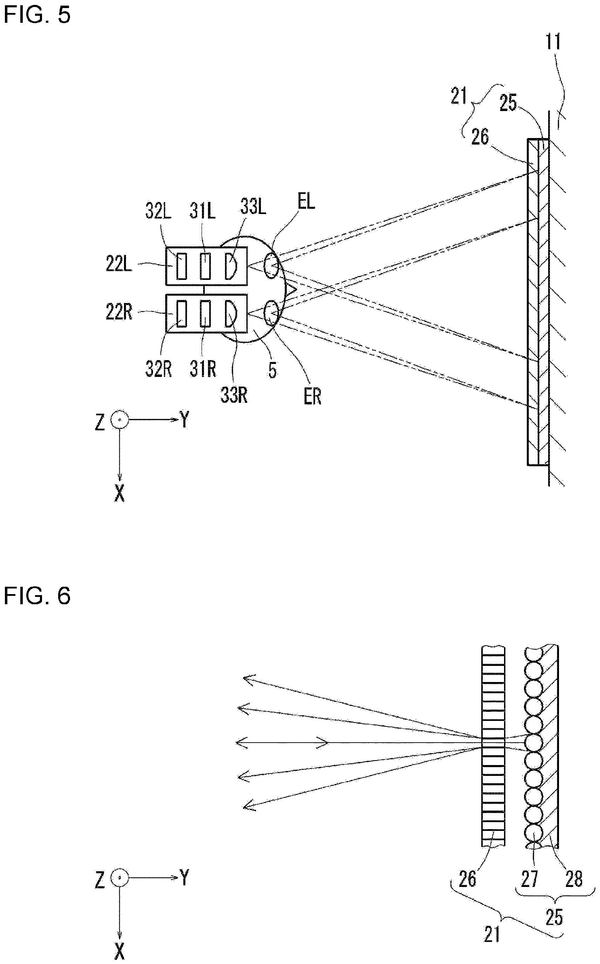

FIG. 5 is a simplified horizontal cross-sectional view of the observer 5 in the vehicle 10, the retroreflective screen 21 in front of the observer 5, and the projectors 22L and 22R. To allow the stereoscopic image display device 2 to stereoscopically display image data of instrument items and see-through image data, the left and right projectors 22L and 22R include, for example, the corresponding transmissive liquid crystal display elements 31L and 31R, the corresponding illuminators 32L and 32R, and the corresponding projection lenses 33L and 33R. The transmissive liquid crystal display elements 31L and 31R display image data of instrument items or see-through image data. The illuminators 32L and 32R illuminate the corresponding liquid crystal display elements 31L and 31R from behind. The projection lenses 33L and 33R project image data from the luminous display surfaces of the corresponding liquid crystal display elements 31L and 31R onto the retroreflective screen 21. These identically structured left and right projectors 22L and 22R each include an optical axis parallel to Y-axis in the XY plane, and are plane symmetric with respect to a YZ plane. The projection lenses 33L and 33R in the projectors 22L and 22R are conjugate to the viewpoints of the left and right eyes EL and ER. Image data for the left eye EL and image data for the right eye ER are projected onto the retroreflective screen 21 for the observer 5 to view a binocular stereoscopic image.

FIG. 6 is an enlarged partial cross-sectional view of the retroreflective screen 21. The retroreflective screen 21 includes a retroreflector 25 and a diffuser plate 26 on the retroreflector 25 facing the observer 5 and the projectors 22L and 22R. The retroreflector 25 includes multiple tiny sphere glass beads 27 each with a diameter of about 20 to 100 μm inclusive arranged planarly and bonded to a reflective film 28. Image light projected onto the diffuser plate 26 in the retroreflective screen 21 enters each glass bead 27, is refracted at the surface of the glass bead 27, reaches the back surface of the glass bead 27 on the reflective film 28, and is reflected from the reflective film 28. The light reflected from the reflective film 28 is refracted again at the surface of the glass bead 27. The emitted light travels along a light path parallel to the incident light at a small distance of less than or equal to the diameter of the glass bead 27 from the incident light, thus performing retroreflection. The screen is not limited to a retroreflective screen and may be any screen that allows a stereoscopic view, such as a scattering screen or a multi-layered screen.

The orthogonal three-axis XYZ coordinate system in one or more embodiments of the present disclosure includes a predetermined fixed origin in the vehicle 10. From the origin, a vehicle width direction is X-direction, a length direction of a moving vehicle is Y-direction, and a height direction is Z-direction. When the vehicle 10 moves on a horizontal road, the XY plane is horizontal.

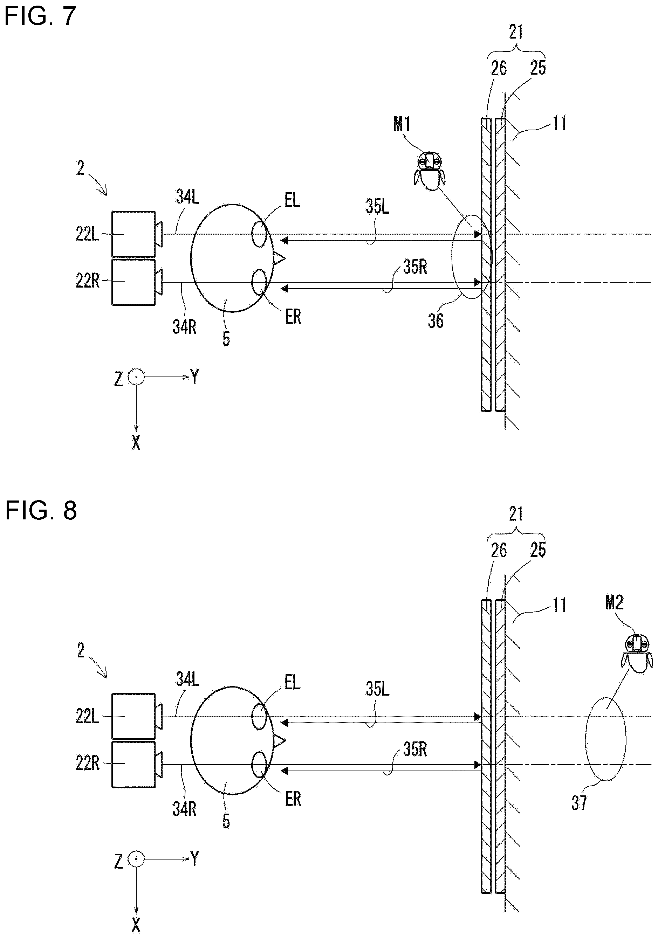

FIG. 7 is a simplified horizontal cross-sectional view of the stereoscopic image display device 2 including the projectors 22L and 22R projecting image data of instrument items onto the retroreflective screen 21 and the observer 5 observing the projected image data and the aerial image M1 from the interior aerial image display device 3. Image light of instrument items from the projection lenses 33L and 33R (FIG. 5 described above) in the projectors 22L and 22R travels along outward optical paths 34L and 34R that are the optical axes, enters the retroreflective screen 21, and is projected. The reflected light from the retroreflective screen 21 is diffused by the diffuser plate 26 mounted on the retroreflector 25 and returns along return optical paths 35L and 35R. The outward optical paths 34L and 34R and the return optical paths 35L and 35R are straight lines aligned or substantially aligned in Y-axis direction. The aerial image M1 forms at a predetermined display position 36 on the dashboard 11 with instrument items being displayed.

When the lines of sight of the left eye EL and the right eye ER of the observer 5 align with the corresponding return optical paths 35L and 35R as in FIG. 7, the observer 5 can perceive instrument items projected onto the dashboard 11 as a stereoscopic image. The aerial image M1 forms at the position 36 on the dashboard 11 with instrument items being projected. The position 36 of the aerial image M1 corresponds to the position of a predetermined gaze point of the observer 5 and allows the observer to view a stereoscopic image of instrument items.

FIG. 8 is a simplified horizontal cross-sectional view of the stereoscopic image display device 2 including the projectors 22L and 22R projecting see-through image data onto the retroreflective screen 21 and the observer 5 observing the projected see-through image data and the aerial image M2 from the exterior aerial image display device 4. The outward optical paths 34L and 34R of see-through image data align with the return optical paths 35L and 35R as in FIG. 7 described above. When the lines of sight of the left eye EL and the right eye ER of the observer 5 align with the corresponding return optical paths 35L and 35R as in FIG. 8, the observer 5 can perceive a see-through image of outside the vehicle projected onto the dashboard 11 as a stereoscopic image. The aerial image M2 is displayed at a position 37 outside the vehicle, and a see-through image projected onto the retroreflective screen 21 on the dashboard 11 is perceived by the observer 5. The position 37 of the aerial image M2 corresponds to the position of a detected gaze point of the observer 5 and allows the observer to view a stereoscopic image of the see-through image data. Thus, retroreflective projection using the retroreflective screen 21 is perceived simply when each line of sight of the observer 5 is on the same straight line extending in the projection direction being the outward optical path 34L or 34R and 35L or 35R of the projectors 22L and 22R.

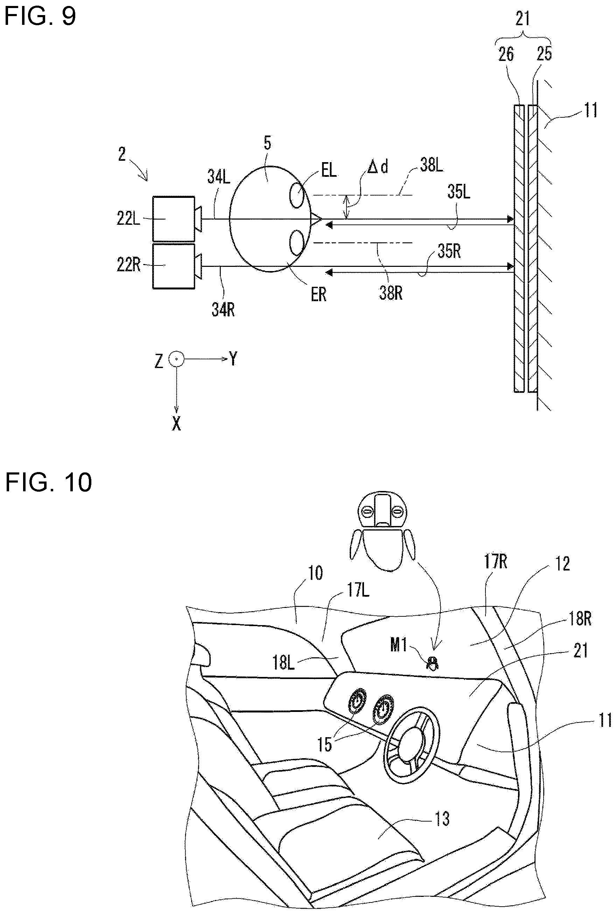

FIG. 9 is a simplified horizontal cross-sectional view of the stereoscopic image display device 2 including the projectors 22L and 22R projecting image data onto the retroreflective screen 21 and the observer 5 viewing no stereoscopic image. A stereoscopic image of instrument items or a see-through image from the retroreflective screen 21 can be viewed in the return optical paths 35L and 35R. In FIG. 9, the lines of sight 38L and 38R corresponding to the positions of a gaze point of the observer 5 do not align with or are slightly deviated from the corresponding return optical paths 35L and 35R by an unintentionally large amount of displacement $\Delta$d in the vehicle width direction X. With left-eye image data and right-eye image data with parallax being projected onto the retroreflective screen 21, the observer 5 is to view image data with the two eyes at the same time. This increases crosstalk, causing no clear stereoscopic image to be viewable.

The diffuser plate 26 mounted on the retroreflector 25 in the retroreflective screen 21 allows the observer 5 to view a clear stereoscopic image when the amount of displacement $\Delta$d between the lines of sight 38L and 38R of the observer 5 and the return optical paths 35L and 35R is small and the lines of sight 38L and 38R corresponding to the position of a gaze point of the observer 5 substantially align with the return optical paths 35L and 35R in which a stereoscopic image of instrument items and a see-through image from the retroreflective screen 21 are viewable. The diffuser plate 26 diffuses incident light in the outward optical paths 34L and 34R in the vehicle width direction X and in the height direction Z in the orthogonal three-axis coordinate system and returns emitted light to the return optical paths 35L and 35R. Thus, a clear image can be obtained when a gaze point of the observer 5, or in other words, the lines of sight 38L and 38R, are misaligned slightly from the return optical paths 35L and 35R corresponding to the positions of the projection lenses 33L and 33R. The diffuser plate 26 may be a diffraction element that diffuses light beams from points in the projectors 22L and 22R in the vehicle width direction X and in the height direction Z.

Without the diffuser plate 26, the observer 5 can observe a clear image simply when the projection lenses 33L and 33R with the same optical path length satisfy an accurate conjugate relationship and a gaze point of the observer 5, or in other words, the lines of sight 38L and 38R, are precisely aligned with the return optical paths 35L and 35R extending in a direction in which the reflected light travels. No clear image can be observed with any small amount of displacement $\Delta$d. The diffuser plate 26 improves usability by easily satisfying the above conjugate relationship. The diffuser plate 26 may be eliminated.

FIG. 10 is a perspective view of the retroreflective screen 21 on the dashboard 11 in the vehicle 10 with image data 15 of instrument items being projected and displayed stereoscopically. The image data 15 of instrument items includes, for example, a console for displaying the speed, the rotation rate, or other readings. The image data 15 of instrument items is generated and projected onto the retroreflective screen 21. The drive 93 is then activated to allow the aerial image M1 to appear at a predetermined coordinate position stored in a coordinate memory 92 (described later) based on a gaze point of the observer 5 near the stereoscopically displayed image data 15. This allows the observer 5 to shift a gaze point into a positional range in which the appearing aerial image M1 is viewable by the observer 5. The observer 5 can then clearly view the image data 15 of instrument items displayed stereoscopically on the retroreflective screen 21. Thus, the aerial image M1 can navigate the gaze point of the observer 5.

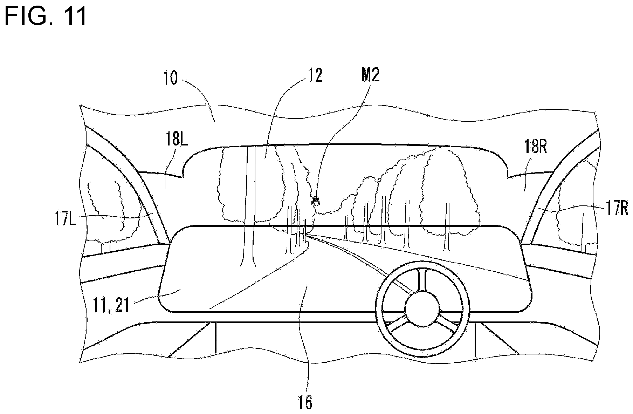

FIG. 11 is a perspective view of the retroreflective screen 21 on the dashboard 11 in the vehicle 10 with see-through image data being projected and displayed stereoscopically. The see-through image data projected on the retroreflective screen 21 allows the observer 5 to view outside scenes blocked by the dashboard 11 as a stereoscopic image with depth connected to the outside scenes viewed through the windshield 12. A gaze point is detected for the observer 5 viewing an object in outside scenes through the windshield 12. The aerial image M2 appears at a position outside the vehicle corresponding to the detected gaze point, and see-through image data to be displayed stereoscopically on the retroreflective screen 21 based on the detected gaze point is generated and projected to be connected to outside scenes viewed through the windshield 12. When the gaze point of the observer 5 is shifted into a positional range in which the displayed aerial image M2 is viewable by the observer 5, the observer 5 can clearly view a see-through image 15 displayed stereoscopically on the retroreflective screen 21. Thus, the aerial image M2 navigates the gaze point of the observer 5.

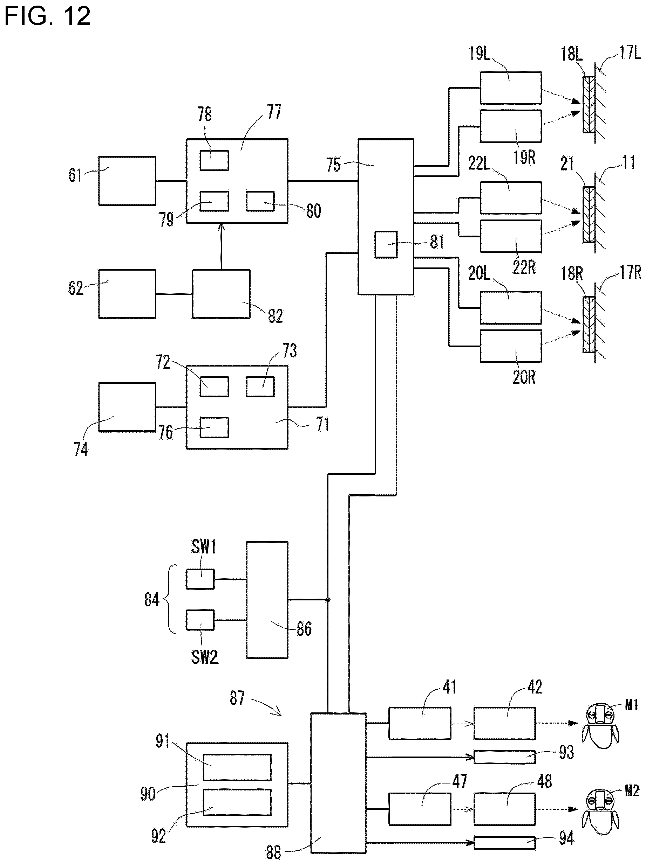

FIG. 12 is an electrical block diagram of the structure according to an embodiment of the present disclosure. The first data generator 71 includes an image memory 72 for instrument items, a gaze point coordinate memory 73, and a processor 76 such as a microcomputer, and receives detection signals with detected values from a value detector 74. The image memory 72 stores image data of instrument items. The gaze point coordinate memory 73 stores the coordinates of predetermined gaze points of the observer 5 in the orthogonal three-axis coordinate system. The value detector 74 detects values such as the traveling speed of the vehicle 10 and the rotational speed of the internal combustion engine. The first data generator 71 provides, for a display controller 75, values corresponding to detection signals from the value detector 74 combined with image data of instrument items in the memory 72 together with the coordinates of gaze points in the memory 73. The display controller 75 includes a processor 80 such as a microcomputer.

The second data generator 77 includes an outside image memory 78, a see-through image memory 79, and a processor 80 such as a microcomputer. The outside image memory 78 stores image data of imaged scenes around the vehicle 10 from the exterior camera 61. The see-through image memory 79 stores see-through image data to be projected onto the retroreflective screen 21 on the dashboard 11. The retroreflective screen 21 includes an image display area. The area being, for example, rectangular is preset with the positions with the coordinates for its four corners. Image data imaged with the exterior camera 61 includes items of image data for an overall portion of a viewing range viewable by the observer 5 corresponding to the positions with the coordinates of, for example, a gaze point of the observer 5 viewing outside the vehicle through the windshield 12. The items of image data including a range blocked by the dashboard 11 are interrelated to the coordinates of individual pixels, stored into the outside image memory 78, and updated. Image data for an area of the retroreflective screen 21 is taken out of the image data in the outside image memory 78 through computation of coordinates and is stored into the see-through image memory 79 as see-through image data.

The interior camera 62 images the face of the observer 5 from in front of the observer 5 or nearby and provides the resultant image data to a gaze point detector 82. The gaze point detector 82 computes and processes image data including the coordinates of the left and right eyes of the observer 5 from the interior camera 62 to detect, for example, a gaze point, a viewpoint, and a line of sight being eye tracking information about the observer 5 through computation, and provides the detected information to the second data generator 77. The gaze point of the observer 5 or other information may be detected with, for example, a magnetic sensor or a gyro sensor attached to the head of the observer 5.

An operation mode selector 84 includes an operation switch SW1 for selecting a mode for displaying an image of instrument items and an operation switch SW2 for selecting a mode for displaying a see-through image. In response to an output from the operation mode selector 84, a display switcher 86 provides a signal from the selected operation switch SW1 or SW2 to the display controller 75 for projection onto the retroreflective screen 21 and a display setter 88 in an aerial image generator 87 for displaying the aerial images M1 or M2. The display position for the aerial image M2 is set based on the arrangement among components such as the luminous display surface 55, the concave mirrors 51 and 52, and the windshield 12 included in the optical system 48 as described above. These components including the components 51, 52, and 55 may be moved by the drive 94 controlled by the display setter 88 and are arranged.

The aerial image generator 87 further includes an aerial image data generator 90. The aerial image data generator 90 includes an aerial image memory 91 and the coordinate memory 92. The aerial image memory 91 stores image data of the aerial images M1 and M2. The coordinate memory 92 stores predetermined coordinate positions for displaying the aerial image M1 for instrument items.

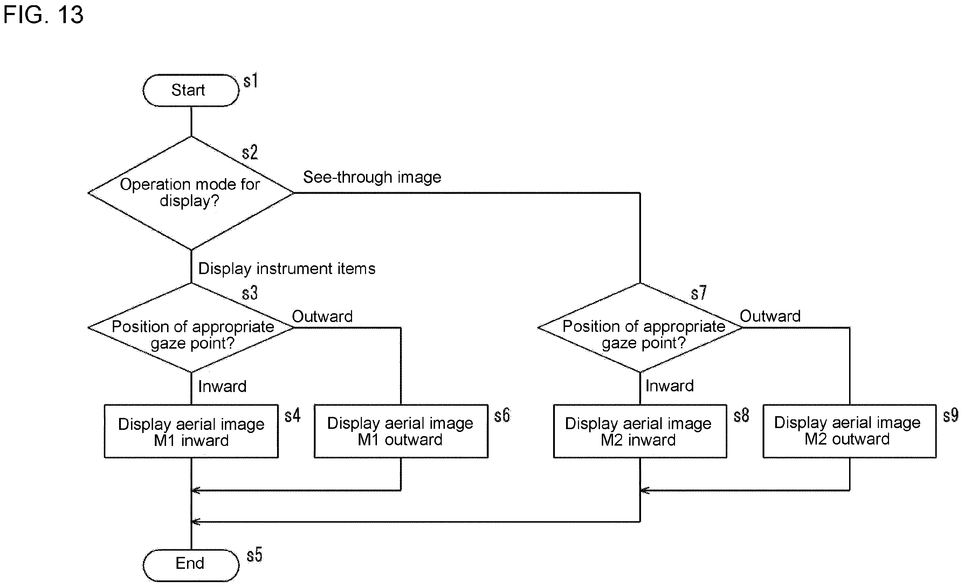

FIG. 13 is a flowchart of the operation performed by the processor 81 in the display controller 75. The processing advances from step s1 to step s2. In response to the display switcher 86 determining that, of the operation switches SW1 and SW2 in the operation mode selector 84, the operation switch SW1 for displaying the instrument items is selected, an appropriate gaze point position is determined in subsequent step s3. In other words, to obtain a stereoscopic image at a predetermined gaze point in the coordinate memory 73 in the first data generator 71, image data having parallax for both the left and right eyes and corresponding to instrument items in the image memory 72 combined with values from the value detector 74 is provided to the liquid crystal display elements 31L and 31R in the left and right projectors 22L and 22R and is projected onto the retroreflective screen 21. The observer 5 then perceives a stereoscopic image. Image data of instrument items combined with values from the value detector 74 may be referred to as instrument items for ease of explanation.

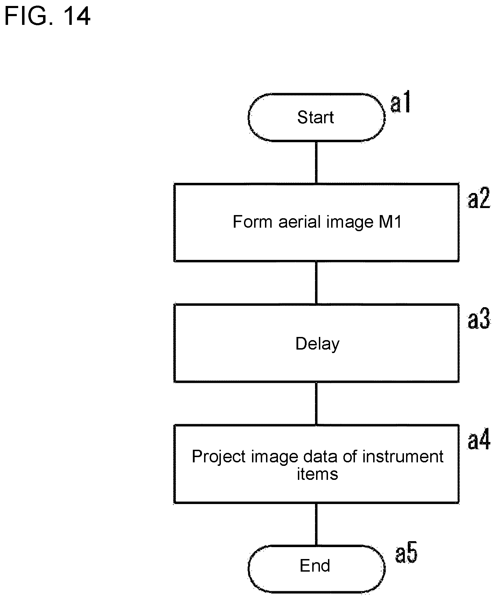

In step s4, the display 41 forms the aerial image M1 in the aerial image memory 91 and the aerial image M1 appears at predetermined coordinates in the coordinate memory 92 corresponding to a gaze point in the gaze point coordinate memory 73. The operation ends in step s5. Instrument items in the vehicle 10 can be stereoscopically perceived using parallax. In this case, the aerial image M1 appears near the display position 36 (FIG. 7) on a projection screen, and the focal point is navigated inward as in step s3 in FIG. 13. A part of the operation in step s4 will be described in detail later with reference to FIG. 14.

Other embodiments of the present disclosure are not limited to displaying a combination of instrument items and the aerial image M1. For example, a navigation map displayed as a stereoscopic image with a gaze point outward from the dashboard may be combined with the aerial image M1 and displayed stereoscopically on the retroreflective screen 21 on the dashboard 11. In this case, the processing in step s3 determines that a gaze point is outward by referring to the coordinate memory 73 and advances to step s6, and the display 41 and the optical system 42 form the aerial image M1 in a space outward from the dashboard 11. The display position for the aerial image M1 is set based on the arrangement of components including the luminous display surface 46, the aerial optical imaging element 43, and the windshield 12 included in the optical system 42 as described above. These components including the components 46 and 43 may be moved by the drive 93 that is controlled by the display setter 88 and are arranged. The coordinate memory 92 and the drive 93 may be eliminated in an embodiment in which a single image is displayed stereoscopically, or for example, instrument items are displayed alone.

In response to the display switcher 86 determining that the operation switch SW2 for the see-through image display mode is selected in step s2 in FIG. 13, an appropriate gaze point is determined in subsequent step s7. In other words, the second data generator 77 receives image data of outside scenes imaged with the exterior camera 61 and the coordinates of a gaze point computed and detected by the gaze point detector 82 based on an output from the interior camera 62.

In step s7, the second data generator 77 generates see-through image data with parallax for a binocular stereoscopic view on the retroreflective screen 21 of an outside view of the observer 5 shielded with the dashboard 11 based on the detected gaze point position. The processor 81 in the display controller 75 functions to provide see-through image data having parallax for both the left and right eyes to the corresponding liquid crystal display elements 31L and 31R in the left and right projectors 22L and 22R. The see-through image data is projected onto the retroreflective screen 21, allowing the observer 5 to perceive a stereoscopic image of outside scenes as connected to outside scenes viewed through the windshield 12. The coordinates of the gaze point detected by the gaze point detector 82 are provided to the display controller 75 and further to the display setter 88. When the projectors 22L and 22R project the see-through image data, the processing advances to, for example, step s8. The display setter 88 causes the display 41 and the optical system 48 to form the aerial image M2 in the aerial image memory 91 at an inward position corresponding to the gaze point detected by the gaze point detector 82 and allows the observer 5 to view a stereoscopic image with a depth of see-through image data. When the gaze point detected by the gaze point detector 82 in step s7 is at, for example, a further outward position, the processing in step s9 causes the display 41 and the optical system 48 to form the aerial image M2 in the aerial image memory 91 at the outward position. Thus, although appropriate positions for the observer 5 to adjust the focal point may vary, the aerial image M1 appears inward with the optical system 42 in FIG. 1 to allow perception of a stereoscopic image on the retroreflective projection screen such as instrument items, and the aerial image M2 appears outward with the optical system 48 in FIG. 2 to navigate lines of sight for perception of outside scenes viewed through the windshield 12.

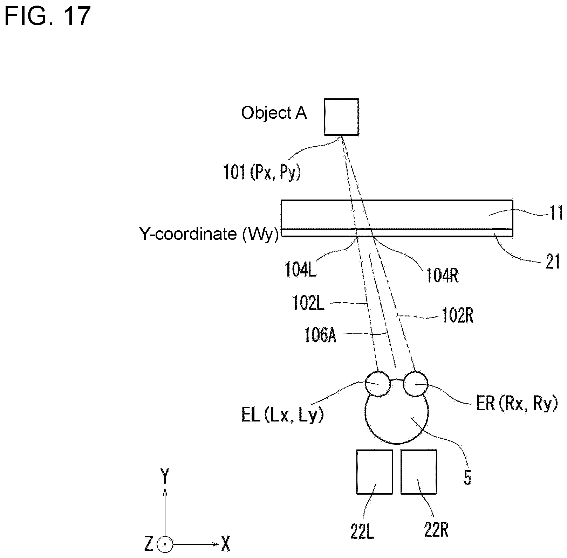

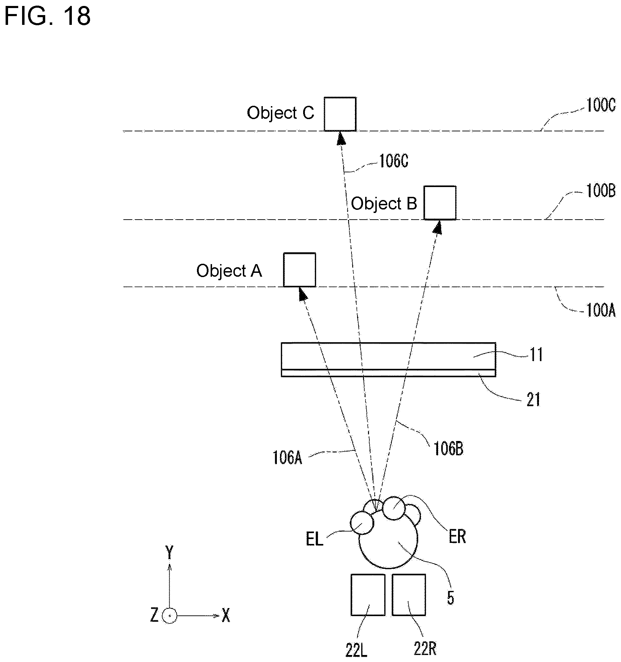

A stereoscopic image displayed on the dashboard 11 can be perceived as being seen through when the image on the dashboard 11 is viewed with the focal point of the eyes of the observer 5 is adjusted to outside the vehicle. To adjust the focal point of the observer 5 outside the vehicle, or in other words, to view see-through image data as a stereoscopic image with a gaze point 101 of the observer 5 in FIGs. 17 and 18 (described later) at an object A, B, or C, the observer 5 is to be navigated to a position corresponding to the gaze point 101. The aerial image M2 is used for the navigation. Thus, the aerial image M2 appears outside the vehicle. The aerial image M2 is used for accurate and natural perception of a stereoscopic image to be perceived as being seen through. Image data corresponding to the positions of the eyes of the observer 5 is generated from output images from the exterior camera 61. The image data includes parallax, and the position for the focal point to be adjusted is determined based on the parallax amount. Thus, the focal point of the observer 5 is to be shifted to a position at which an image is accurately viewable. Thus, the display position of the aerial image M2 is to be determined in the vehicle length direction Y based on see-through image data. In this manner, with the retroreflective screen 21 on the dashboard 11 showing see-through image data corresponding to outside objects as being seen through, the aerial image M2 appears outward from the projection screen and navigates the focal point outward from the focal point for instrument items being displayed.

Additionally, image data having parallax for forming a stereoscopic image displayed on the dashboard 11 is viewed accurately as an image without crosstalk simply in a particular area defined with the projectors 22L and 22R and the retroreflector 25. Thus, the aerial image M2 is to navigate the position of a viewpoint in the vehicle width direction X and also in the height direction Z using the diffuser plate 26.

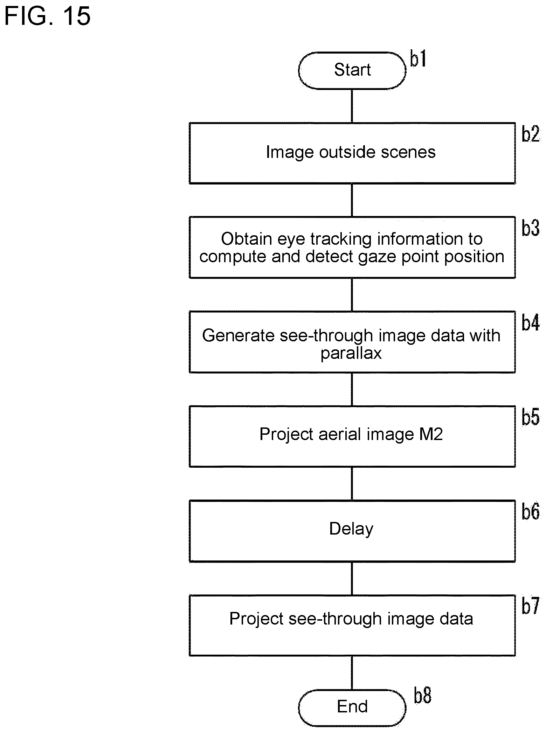

The operation performed by the second data generator 77 is further described. As the observer 5 as a driver boards and starts the vehicle 10, the vehicle 10 is in a driving state. The exterior camera 61 then starts imaging outside scenes, and the gaze point detector 82 starts imaging the head of the observer 5 seated in the driver's seat 13. A viewpoint, or in other words, the position of a gaze point, is detected as spatial coordinates with image recognition or other methods. In response to positional information about a gaze point output from the gaze point detector 82, the second data generator 77 generates image data with parallax for a stereoscopic image corresponding to the gaze point position of the observer 5. The image data is provided from the display controller 75 to the projectors 22L and 22R and projected onto the retroreflective screen 21. A stereoscopic image corresponding to the gaze point position of the observer 5 is then displayed. At the same time, the aerial image M2 viewable simply from a position at which the stereoscopic image is appropriately viewable appears. Subsequently, the processing in step s7 determines whether the image on the dashboard 11 is appropriately viewable with an inward focal point or with an outward focal point. Upon determining that the image is appropriately viewable inward in step s7, the aerial image M2 appears inward in step s8. Upon determining that the image is appropriately viewable outward in step s7, the aerial image M2 appears outward in step s9. A part of the operation in steps s8 and s9 will be described in detail later with reference to FIG. 15.

FIG. 14 is a flowchart of the operation performed by the processor 81 in the display controller 75, further describing a part of the operation in step s4 in FIG. 13. As the processing advances from step a1 to step a2, the display setter 88 causes the display 41 to form the aerial image M1. The processing advances to step a4 with a delay, or after a predetermined time ΔT passes in step a3. In step a4, image data having parallax for both the left and right eyes and corresponding to instrument items in the image memory 72 is projected onto the retroreflective screen 21 by the left and right projectors 22L and 22R as described above, and the observer 5 perceives a stereoscopic image as indicated with the reference numeral 15 in FIG. 10. The aerial image M1 appears first. After a delay of the time ΔT, the image data of instrument items having parallax for both the left and right eyes is projected. Thus, the observer 5 views the aerial image M1, shifts the gaze point to the position of the aerial image M1, causes the crystalline lenses of the left and right eyes to each form the aerial image M1 at the focal point on the corresponding retina, and then perceives a stereoscopic image corresponding to the image data having parallax for both the left and right eyes. The observer 5 thus perceives the stereoscopic image easily. The time ΔT may be, for example, 0.1 to 0.5 seconds.

FIG. 15 is a flowchart of the operation performed by the processor 81 in the display controller 75, further describing a part of the operation in step s8 in FIG. 13. As the processing advances from step b1 to step b2, image data of scenes imaged with the exterior camera 61 is stored into the outside image memory 78 in the second data generator 77. In step b3, the gaze point detector 82 computes and detects eye tracking information including the coordinates of a gaze point of the observer 5 based on the image data imaged with the interior camera 62. In step b4, the second data generator 77 generates see-through image data having parallax for projection onto the retroreflective screen 21 based on image data in the outside image memory 78 and the coordinates of a gaze point.

In step b5, the aerial image M2 is projected and appears before the see-through image data is projected. In step b6, a delay of the time ΔT occurs as described above after the aerial image M2 forms. In step b7, the left projector 22L and the right projector 22R project see-through image data having parallax for both the left and right eyes onto the retroreflective screen 21. The observer 5 perceives the stereoscopic image. The aerial image M2 appears first and after a delay of the ΔT, the see-through image data of outside scenes having parallax for both the left and right eyes is projected. The observer 5 thus views the aerial image M2 before perceiving a stereoscopic image corresponding to the see-through image data having parallax for both the left and right eyes, thus allowing easy perception of a stereoscopic image. In other embodiments of the present disclosure, the time ΔT in step a3 in FIG. 14 and in step b6 in FIG. 15 may be zero. One or more embodiments of the present disclosure further include a display delayer (step a3 in FIG. 14 and step b6 in FIG. 15) that causes the projectors 22L and 22R to project predetermined image data such as instrument items and see-through image data when a predetermined time ΔT passes after image formation or formation of the aerial image M1 or M2 by the aerial image generator 87.

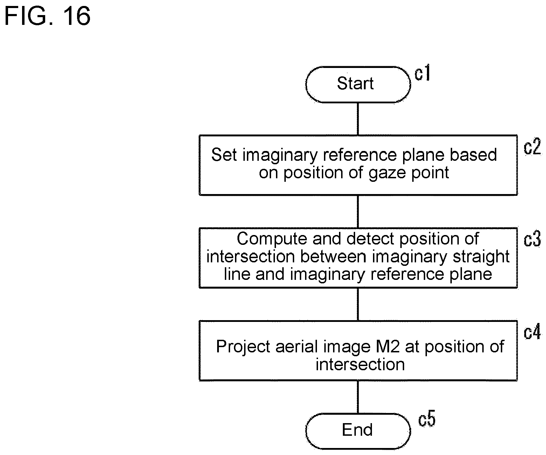

FIG. 16 is a flowchart of the operation of computing coordinates of the position of aerial image M2 formation while the processor 80 in the second data generator 77 is generating see-through image data having parallax for both the left and right eyes. As the processing advances from step c1 to step c2, imaginary reference planes 100A to 100C (refer to FIG. 18, collectively denoted by a reference numeral 100) are set based on the position of a gaze point detected by the gaze point detector 82.

FIG. 17 is a simplified plan view describing positions on the retroreflective screen 21 onto which left see-through image data and right see-through image data with parallax are projected. The observer 5 gazes an outside object A with both the left and right eyes EL and ER through the windshield 12. In one or more embodiments of the present disclosure, although the XY plane in the orthogonal three-axis XYZ coordinate system is described for ease of explanation, extension along Z-axis may be easy for those skilled in the art. The detected gaze point 101 has coordinates (Px, Py) as the position of the object A in this coordinate system. The line of sight 102L from the left eye EL and the line of sight 102R from the right eye ER intersect at the gaze point 101 on an imaginary plane including these lines of sight 102L and 102R. The lines of sight 102L and 102R pass the retroreflective screen 21 through positions 104L and 104R. The projectors 22L and 22R project a see-through image with lateral parallax onto the positions 104L and 104R.

The projection positions 104L and 104R on the retroreflective screen 21 vary depending on the coordinates (Px, Py) of the position of the object A in the Y-direction that is the depth direction and in the lateral X-direction. The projection positions 104L and 104R can be calculated based on, for example, (1) eye tracking information including the coordinates (Lx, Ly) and (Rx, Ry) of the positions of the left and right eyes EL and ER of the observer 5, (2) the distance between the left and right eyes EL and ER and the dashboard 11 being a shielding portion, or in other words, the distance between the position of the retroreflective screen 21 extending laterally in X-direction (with a Y-axis coordinate being Wy) and the left and right eyes EL and ER, and (3) the coordinates (Px, Py) of the position of the object A. The positions of the two eyes EL and ER are each the position of the center of the pupil in an opening defined by the corresponding iris and may be approximate to the position of the head. The eye tracking information (1) described above and the distance (2) described above can be obtained from an output from the interior camera 62. The position of the object A (3) described above can be obtained from an output from the exterior camera 61 or an object detection sensor, or by the gaze point detector 82 as the position of the object A that is the position of the gaze point 101.

In FIG. 17, the coordinates of the projection positions 104L and 104R are obtained as described below. The coordinates of the projection position 104L are provided as below.

$$\left(\frac{Px-Lx}{Py-Ly}Wy + \frac{LxPy-LyPx}{Py-Ly},\ Wy\right)$$

The coordinates of the projection position 104R are provided as below.

$$\left(\frac{Px-Rx}{Py-Ry}Wy + \frac{RxPy-RyPx}{Py-Ry},\ Wy\right)$$

FIG. 18 is a simplified plan view of imaginary reference planes 100A to 100C for determining, through computation, the coordinates of the position of aerial image M2 formation in one or more embodiments of the present disclosure. When the positions (Lx, Ly) and (Rx, Ry) of the left and right eyes EL and ER in FIG. 17 described above are connected with a line segment, a perpendicular bisector of the line segment is collectively denoted by a reference numeral 106 to which an alphabet of the reference numeral of one of the objects A to C in FIGs. 17 and 18 is attached. The perpendicular bisector is referred to as a line of sight of the observer. An observer sight line 106 is derived from the eye tracking information from the interior camera 62 by the second data generator 77. In one or more embodiments of the present disclosure, an object having the shortest distance among the distances between the eyes EL and ER of the observer 5 and the objects A to C along the corresponding observer sight lines 106A to 106C, or in other words, an object nearest the observer 5 (object A in FIG. 18), is used as a reference. The XZ plane including the coordinates (Px, Py) of the object A is set as an imaginary reference plane 100A, and step c2 in FIG. 16 is performed. The XZ plane includes the y-coordinate Py of the object A and is perpendicular to Y-axis extending in the vehicle length direction.

The observer sight line 106 may be determined by Formula 1 below.

$$(Rx - Lx)x + (Ry - Ly)y - (Rx^2 + Ry^2) + (Lx^2 + Ly^2) = 0 \quad (1)$$

In this manner, the observer sight line 106 by Formula 1 is calculated based on eye tracking information. The imaginary reference plane 100A is then set based on the distance between the observer sight line 106 and the object A. The distance between the observer 5 and the object A may be calculated based on the positions (Lx, Ly) and (Rx, Ry) of the left and right eyes EL and ER and the coordinates (Px, Py) of the object A.

In other embodiments, the reference may be, for example, an object being a nearest one of objects A to C having distances between the eyes EL and ER of the observer 5 and the objects A to C along the observer sight lines 106A to 106C each greater than or equal to a predetermined distance.

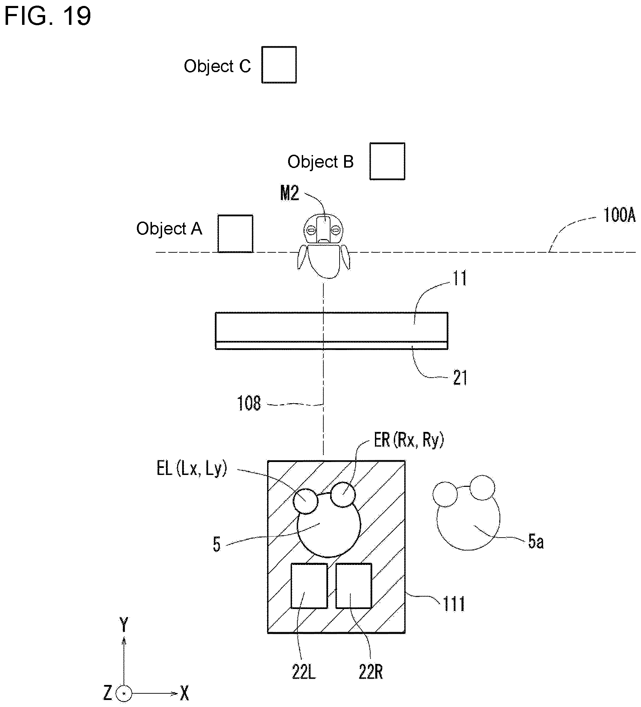

FIG. 19 is a simplified plan view describing the operation performed by the second data generator 77 that sets the coordinates of the position of aerial image M2 formation. This operation is performed in step c3 in FIG. 16. See-through image data with parallax to be projected onto the projection positions 104 and 104R (FIG. 17) on the retroreflective screen 21 is generated based on the set imaginary reference plane 100A. An imaginary straight line 108 is set first to determine the coordinates of the position of aerial image M2 formation. The imaginary straight line 108 is a straight line parallel to Y-axis and extending through a middle point of the projection lenses 33L and 33R in the projectors 22L and 22R in X-direction, and is the observer sight line 106 of the left and right eyes EL and ER of the observer 5 facing frontward. The position of an intersection between the imaginary straight line 108 and the imaginary reference plane 100 (100A in FIG. 19) is then computed. The intersection is set as the coordinates of a position of aerial image M2 formation. The second data generator 77 generates see-through image data with parallax for the observer 5 to view a binocular stereoscopic image on the imaginary reference plane 100 including the position of the detected gaze point and perpendicularly intersecting with the imaginary straight line 108 extending in the projection direction from the projectors 22L and 22R. When the projectors 22L and 22R project the see-through image data, the aerial image generator 87 generates the aerial image M2 viewable by the observer 5 at the intersecting position on the imaginary reference plane 100. Thus, in step c4, the second data generator 77 sets the position of aerial image M2 formation, the display setter 88 reads data of the aerial image M2 from the aerial image memory 91 and provides the data to the illuminator 54 in the display 47 (FIG. 2). The aerial image M2 forms at the set position corresponding to the detected gaze point and allows the observer 5 to view a stereoscopic image of the see-through image data.

Image data projected on the retroreflective screen 21 can be perceived as a stereoscopic image simply when viewpoints of the left and right eyes EL and ER and the projection lenses 33L and 33R in the left and right projectors 22L and 22R satisfy conjugate positional relationships with respect to the retroreflective screen 21. Otherwise, crosstalk increases in the image data with parallax, and no clear stereoscopic image can be viewed. The retroreflective screen 21 and the projectors 22L and 22R are fixed to the vehicle 10. Thus, a stereoscopic image can be perceived simply when the left and right eyes EL and ER of the observer 5, or in other words, the head is located in an appropriate range 111 being a predetermined range indicated with hatching in FIG. 19. When the left and right eyes EL and ER and the head are located outside the appropriate range 111 as indicated by the reference numeral 5a, the aerial image M2 forming on the imaginary reference plane 100A is not viewable. Thus, the observer 5 failing to view the aerial image M2 is to shift the left and right eyes EL and ER and the head into the appropriate range 111 to view the image. In this manner, the aerial image M2 navigates the left and right eyes EL and ER and the head of the observer 5 into the appropriate range 111.

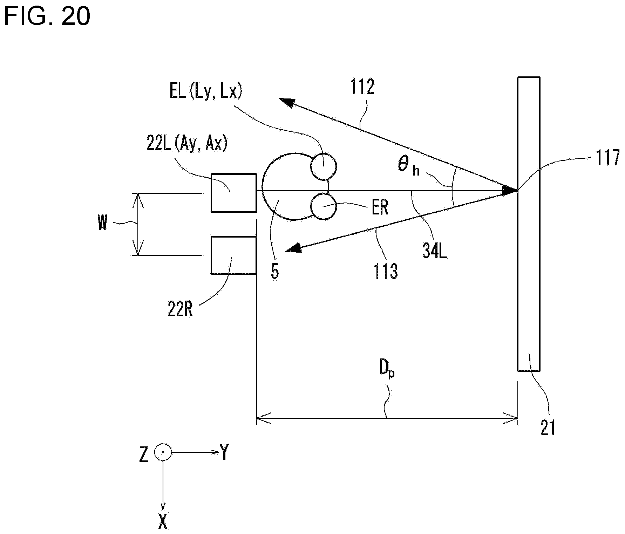

FIG. 20 is a plan view describing conditions to define an area in the XY plane corresponding to the appropriate range 111. The projection lens 33L in the projector 22L has predetermined coordinates (Ay, Ax). The left eye EL is detected at coordinates (Ly, Lx). The outward optical path 34L being the optical axis of the projector 22L intersects with the retroreflective screen 21 at an intersection 117. The retroreflective screen 21 diffuses light symmetrically with respect to a plane perpendicular to X-axis. The diffusive light diffuses laterally in X-direction with an angle of θh between boundaries 112 and 113. The distance between the projection lens 33L in the projector 22L and the retroreflective screen 21 in Y-direction is Dp. The boundary 112 may be determined by Formula 2 below. The optical axis of the projector 22L is aligned with the outward optical path 34L and is denoted by the reference numeral 34. The boundaries 112 and 113 for diffusing diffusive light are symmetric with respect to a plane perpendicular to the XY plane including the optical axis 34.

$$x = y \tan\frac{\theta_h}{2} + A_x - (A_y + D_p)\tan\frac{\theta_h}{2} \tag{2}$$

Thus, the left and right eyes EL and ER in the appropriate range 111 for viewing the aerial image M2 each have the X-coordinate in an area simultaneously satisfying two formulas, Formulas 3 and 4. The distance between the optical axis 34 of the projector 22L and the optical axis of the projector 22R parallel to the optical axis 34 is W in X-direction.

$$A_x - W < L_x < A_x + W \tag{3}$$

$$L_x > L_y \tan\frac{\theta_h}{2} + A_x - (A_y + D_p)\tan\frac{\theta_h}{2} \tag{4}$$

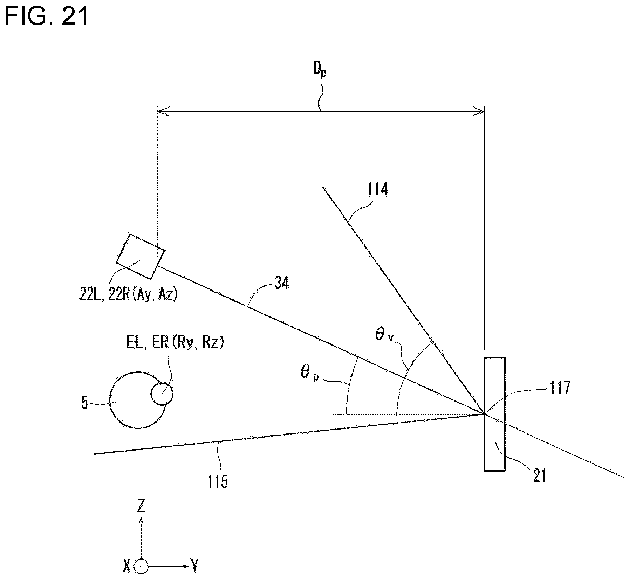

FIG. 21 is a plan view describing conditions to define an area in the YZ plane corresponding to the appropriate range 111. The projection lenses 33L and 33R in the projectors 22L and 22R have predetermined coordinates (Ay, Az). The left and right eyes EL and ER are detected at coordinates (Ry, Rz). Light in the outward optical path 34L from the projectors 22 is diffused by the retroreflective screen 21. The diffusive light diffuses vertically in Z-direction with an angle of θv between boundaries 114 and 115. The distance between the projection lenses 33L and 33R in the projectors 22L and 22R and the retroreflective screen 21 is Dp in Y-direction as described above. The optical axis 34 of the projectors 22L and 22R forms an angle of θp with respect to Y-axis. In this case, the optical axis 34 may be determined by Formula 5 below. The boundaries 114 and 115 for diffusing diffusive light are symmetric with respect to a plane perpendicular to the YZ plane including the optical axis 34.

$$z = y\tan\theta_p + A_z - A_y\tan\theta_p \tag{5}$$

The boundary 115 may be determined by Formula 6 below.

$$z = y\tan\left(\theta_p + \frac{\theta_v}{2}\right) + b \tag{6}$$

The letter b is determined as in Formula 7 below.

$$b = D_p\tan\theta_p + A_z - \left(A_y + D_p\right)\tan\left(\theta_p + \frac{\theta_v}{2}\right) \tag{7}$$

Thus, the left and right eyes EL and ER in the appropriate range 111 for viewing the aerial image M2 each have the Z-coordinate in an area satisfying Formula 8. The letter c in Formula 8 is determined as in Formula 9.

$$R_z > R_y\tan\left(\theta_p + \frac{\theta_v}{2}\right) + c \tag{8}$$

$$c = D_p\tan\theta_p + A_y - \left(A_x + D_p\right)\tan\left(\theta_p + \frac{\theta_v}{2}\right) \tag{9}$$

The appropriate range 111 is a 3D space including the head of the observer 5 and is surrounded by two imaginary planes perpendicular to the XY plane each including one of the boundaries 112 and 113 in FIG. 20 and imaginary planes perpendicular to the YZ plane each including one of the boundaries 114 and 115 in FIG. 21.

As illustrated in FIGs. 10 and 11, the left and right side pillars 17L and 17R in the vehicle 10 also include retroreflective screens 18L and 18R. The second data generator 77 and the display controller 75 function to generate outside image data connected to outside scenes through the windshield 12. The image data is projected by two pairs of projectors 19L and 19R and projectors 20L and 20R and can be displayed stereoscopically on the retroreflective screens 18L and 18R.

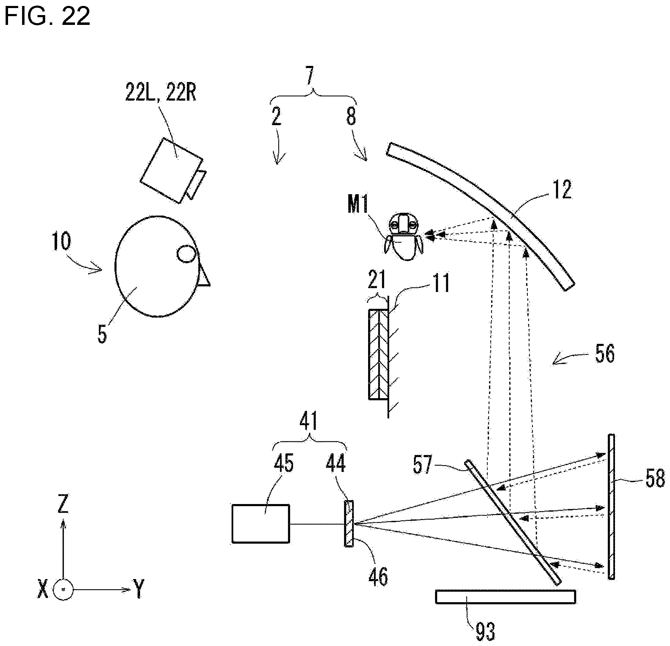

FIG. 22 is a schematic diagram of an image display device 7 according to another embodiment of the present disclosure. The image display device 7 in the present embodiment is similar to the embodiment in FIG. 1 described above. The same reference numerals denote the corresponding components. In an interior aerial image display device 8, an image on a luminous display surface 46 in a display 41 forms as a real image of an aerial image M1 inside a vehicle through an optical system 56. In the optical system 56, image light emitted from the luminous display surface 46 in Y-direction passes through a plate beam splitter 57 located obliquely and is reflected from a retroreflector 58 located outward from the beam splitter 57. Reflected light returns in the same direction and is reflected by the beam splitter 57 in Z-direction, or upward in FIG. 22. The reflected light is then reflected from a concave surface of a windshield 12 facing inside the vehicle and forms an image at a predetermined imaging position. The observer 5 can thus view a real image of the aerial image M1 formed by the optical system 56. The predetermined position for aerial image M1 formation corresponds to the position of a predetermined gaze point of the observer 5 and is an appropriate position that allows the observer 5 to view a stereoscopic image of instrument items. The luminous display surface 46, the beam splitter 57, a reflection mirror, and another component may be moved by a drive 93 and relocated at predetermined positions in Y-direction that is the depth direction.

The present disclosure may be implemented in the following embodiments (1) to (3).

(1) An image display device, comprising:

a retroreflective screen 21;
projectors 22L and 22R configured to project images to cause a left eye and a right eye of an observer to perceive a stereoscopic image onto the retroreflective screen 21;
a data generator 71 configured to generate predetermined image data with binocular parallax for a binocular stereoscopic view of a predetermined image corresponding to a position of a predetermined gaze point on the retroreflective screen 21; and
an aerial image generator 87 storing image data of a predetermined aerial image M1,
wherein with the projectors 22L and 22R projecting the predetermined image data from the data generator 71, the aerial image generator 87 forms the aerial image M1 at a position corresponding to the position of the predetermined gaze point and allows the observer to view a stereoscopic image of the predetermined image data.

(2) An image display device, comprising:

an exterior camera 61 being an imager configured to image subjects such as scenes and obj ects;
a gaze point detector 82 configured to detect a position of a gaze point of an observer viewing a space including the subjects;
a retroreflective screen 21;
projectors 22L and 22R configured to project images to cause a left eye and a right eye of the observer to perceive a stereoscopic image onto the retroreflective screen 21;
a data generator 77 configured to generate, in response to an output from the exterior camera 61 being the imager and an output from the gaze point detector 82, image data with parallax for a binocular stereoscopic view on the retroreflective screen 21 based on the position of the detected gaze point; and
an aerial image generator 87 storing image data of a predetermined aerial image M2,
wherein with the projectors 22L and 22R projecting image data from the data generator 77, the aerial image generator 87 forms the aerial image M2 at a position corresponding to the gaze point detected by the gaze point detector 82 and allows the observer to view a stereoscopic image of the image data.

(3) The image display device according to (1) or (2), further comprising:
a display delayer configured to cause the projectors 22L and 22R to project image data after a predetermined time ΔT passes from formation of the aerial image M1 or M2 by the aerial image generator 87.

The present disclosure may be implemented in the following forms.

An image display device, comprising:

an exterior imager configured to image surroundings of a vehicle;
a gaze point detector configured to detect a position of a gaze point of an observer seated on a seat in the vehicle;
a screen on a shielding portion in the vehicle, the shielding portion blocking an outside view of the observer;
a projector configured to project a stereoscopic image onto the screen;
a first data generator configured to generate first image data;
a second data generator configured to generate second image data based on data output from the exterior imager;
a switcher configured to switch data to be projected onto the screen between the first image data and the second image data; and
an aerial image generator storing image data of a predetermined aerial image, the aerial image generator being operable in response to an output from the switcher,
wherein with the switcher causing the first image data to be projected onto the screen, the aerial image generator causes an aerial image to appear at a position of a predetermined gaze point, and
with the second image data being projected onto the screen, the aerial image generator causes an aerial image to appear at a position corresponding to the gaze point detected by the gaze point detector and allows the observer to view an image of the second image data.

In the image display device according to one or more embodiments of the present disclosure, when the aerial image formed by the aerial image generator is viewable by the observer, the gaze point of the left and right eyes of the observer is at a position at which an image projected on the screen can be perceived as a stereoscopic image. When the aerial image formed by the aerial image generator is not viewable, the gaze point of the observer is at a position at which no projected image can be perceived as a stereoscopic image. Thus, the position of a gaze point of the observer can be indirectly navigated easily to an appropriate position for stereoscopic image perception based on whether the observer can view the aerial image formed by the aerial image generator.

INDUSTRIAL APPLICABILITY

The embodiments of the present disclosure is not limited be implemented in vehicles and may be broadly implemented in the field other than vehicles as an image display device including a projector to project image data having parallax for both the left and right eyes onto a retroreflective screen to achieve perception of a stereoscopic image.

REFERENCE SIGNS

    1 image display device
    2 stereoscopic image display device
    3, 8 interior aerial image display device
    4 exterior aerial image display device
    5 observer
    7 image display device
    10 vehicle
    11 dashboard
    12 windshield
    13 driver's seat
    21 retroreflective screen
    22L, 22R projector
    31L, 31R, 44, 53 transmissive liquid crystal display element
    38L, 38R line of sight
    41 display
    42, 48, 56 optical system
    43 aerial optical coupling element
    46, 55 luminous display surface
    61 exterior camera
    62 interior camera
    71 data generator
    75 display controller
    77 second data generator
    82 gaze point detector
    84 operation mode selector
    86 display switcher
    87 aerial image generator
    88 display setter
    90 aerial image data generator
    93, 94 drive
    100, 100A to 100C imaginary reference plane
    101 gaze point
    102L, 102R line of sight
    106 line of sight of observer
    108 imaginary straight line
    M1, M2 aerial image
    EL, ER eye

Claims

1.    An image display device, comprising:

an exterior imager configured to image surroundings of a vehicle;

a gaze point detector configured to detect a position of a gaze point of an observer seated on a seat in the vehicle;

a screen on a shielding portion in the vehicle, the shielding portion blocking an outside view of the observer;

a projector configured to project a stereoscopic image onto the screen;

a first data generator configured to generate first image data;

a second data generator configured to generate second image data based on data output from the exterior imager;

a switcher configured to switch data to be projected onto the screen between the first image data and the second image data; and

an aerial image generator storing image data of a predetermined aerial image, the aerial image generator being operable in response to an output from the switcher,

wherein with the switcher causing the first image data to be projected onto the screen, the aerial image generator causes an aerial image to appear at a position of a predetermined gaze point, and

with the second image data being projected onto the screen, the aerial image generator causes an aerial image to appear at a position corresponding to the gaze point detected by the gaze point detector and allows the observer to view an image of the second image data.

2. The image display device according to claim 1, wherein

the first image data is stereoscopically viewable predetermined data to be displayed on the screen, and

the second image data is stereoscopically viewable see-through image data to be displayed on the screen.

3. The image display device according to claim 2, wherein

the screen is a retroreflective screen, and

the aerial image appears at a position to allow a stereoscopic image of image data displayed on the screen to be viewable.

4. The image display device according to any one of claims 1 to 3, wherein

the vehicle includes, in front of the seat, a transparent windshield including a concave surface facing inside the vehicle, and

the aerial image generator includes

a display including a luminous display surface configured to display, with the first image data being projected by the projector, image data of an aerial image from the first data generator, and

an optical element configured to cause an image displayed on the luminous display surface to be reflected from the concave surface of the windshield to form as a real image viewable by the observer.

5. The image display device according to any one of claims 1 to 3, wherein

the second data generator generates second image data with parallax to allow the observer to view a binocular stereoscopic image on an imaginary reference plane including a position of the detected gaze point and a position of intersection at which an imaginary straight line extending in a projection direction of the projector intersects perpendicularly with the imaginary reference plane, and

with the second image data being projected by the projector, the aerial image generator generates an aerial image viewable by the observer at the position of intersection on the imaginary reference plane.

6. The image display device according to claim 5, wherein

the vehicle includes, in front of the seat, a transparent windshield including a concave surface facing inside the vehicle, and

the aerial image generator includes

a display including a luminous display surface configured to display, with second image data being projected by the projector, an image of an aerial image, and

an optical system including a concave mirror, the optical system being configured to cause an image displayed on the luminous display surface to be reflected from the concave mirror and from the concave

16

surface of the windshield to form as a virtual image viewable by the observer.

7. The image display device according to any one of claims 1 to 6, further comprising:
a display delayer configured to cause the projector to project the first image data and the second image data after a predetermined time passes from formation of an aerial image by the aerial image generator.

FIG. 1

FIG. 2

FIG. 3

FIG. 4

FIG. 5

FIG. 6

FIG. 7

FIG. 8

FIG. 9

FIG. 10

FIG. 11

# FIG. 12

# FIG. 13

# FIG. 14

```
        ( Start )  a1
           │
    ┌───────────────┐
    │ Form aerial   │  a2
    │  image M1     │
    └───────────────┘
           │
    ┌───────────────┐
    │     Delay     │  a3
    └───────────────┘
           │
    ┌───────────────┐
    │ Project image │  a4
    │ data of       │
    │ instrument    │
    │ items         │
    └───────────────┘
           │
        (  End  )  a5
```

FIG. 15

```
        ( Start ) b1
           │
           ▼
┌─────────────────────────┐ b2
│   Image outside scenes   │
└─────────────────────────┘
           │
           ▼
┌─────────────────────────┐ b3
│ Obtain eye tracking information to │
│ compute and detect gaze point position │
└─────────────────────────┘
           │
           ▼
┌─────────────────────────┐ b4
│ Generate see-through image data with │
│           parallax           │
└─────────────────────────┘
           │
           ▼
┌─────────────────────────┐ b5
│    Project aerial image M2    │
└─────────────────────────┘
           │
           ▼
┌─────────────────────────┐ b6
│          Delay           │
└─────────────────────────┘
           │
           ▼
┌─────────────────────────┐ b7
│ Project see-through image data │
└─────────────────────────┘
           │
           ▼
        (  End  ) b8
```

FIG. 16

```
        ┌─────────────┐
        │    Start    │ c1
        └──────┬──────┘
               │
┌──────────────┴──────────────┐
│ Set imaginary reference      │ c2
│ plane based on position of   │
│ gaze point                   │
└──────────────┬──────────────┘
               │
┌──────────────┴──────────────┐
│ Compute and detect position  │ c3
│ of intersection between      │
│ imaginary straight line and  │
│ imaginary reference plane    │
└──────────────┬──────────────┘
               │
┌──────────────┴──────────────┐
│ Project aerial image M2 at   │ c4
│ position of intersection     │
└──────────────┬──────────────┘
               │
        ┌──────┴──────┐
        │     End     │ c5
        └─────────────┘
```

FIG. 17

Object A

101 (Px, Py)

Y-coordinate (Wy)

11

21

104L

104R

102L

102R

106A

EL (Lx, Ly)

ER (Rx, Ry)

5

22L

22R

Y

Z

X

# FIG. 18

Object C —— 100C

106C

Object B —— 100B

Object A

—— 100A

11

21

106A        106B

EL        ER

5

22L        22R

Y
Z ⊙ →X

FIG. 19

FIG. 20

FIG. 21

$D_p$

114

22L, 22R (Ay, Az)

34

EL, ER (Ry, Rz)

$\theta_v$

$\theta_p$

5

117

115

21

Z

X ↗ Y

FIG. 22

## INTERNATIONAL SEARCH REPORT

| International application No. |
| --- |
| **PCT/JP2022/022391** |

**A. CLASSIFICATION OF SUBJECT MATTER**

*G02B 27/01*(2006.01)i; *B60K 35/00*(2006.01)i; *G02B 30/35*(2020.01)i; *G02B 30/60*(2020.01)i; *H04N 13/346*(2018.01)i; *H04N 13/363*(2018.01)i; *H04N 13/383*(2018.01)i
FI: G02B27/01; G02B30/60; G02B30/35; B60K35/00 A; H04N13/363; H04N13/383; H04N13/346

According to International Patent Classification (IPC) or to both national classification and IPC

**B. FIELDS SEARCHED**

Minimum documentation searched (classification system followed by classification symbols)

G02B27/01; B60K35/00; G02B30/35; G02B30/60; H04N13/346; H04N13/363; H04N13/383

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2020-116965 A (YAZAKI CORP) 06 August 2020 (2020-08-06)<br>entire text, all drawings | 1-7 |
| A | WO 2019/097918 A1 (MAXELL, LTD.) 23 May 2019 (2019-05-23)<br>entire text, all drawings | 1-7 |
| A | JP 2006-088722 A (NISSAN MOTOR CO LTD) 06 April 2006 (2006-04-06)<br>entire text, all drawings | 1-7 |
| A | JP 2011-070074 A (STANLEY ELECTRIC CO LTD) 07 April 2011 (2011-04-07)<br>entire text, all drawings | 1-7 |
| A | WO 2017/013739 A1 (MITSUBISHI ELECTRIC CORPORATION) 26 January 2017 (2017-01-26)<br>entire text, all drawings | 1-7 |
| A | US 2020/0073120 A1 (CONTINENTAL AUTOMOTIVE GMBH) 05 March 2020 (2020-03-05)<br>entire text, all drawings | 1-7 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 July 2022** | **19 July 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/022391**

| Patent document cited in search report | | | | Publication date (day/month/year) | Patent family member(s) | | | Publication date (day/month/year) |
|---|---|---|---|---|---|---|---|---|
| JP | 2020-116965 | | A | 06 August 2020 | US | 2020/0234583 | A1 | |
| | | | | | entire text, all drawings | | | |
| | | | | | EP | 3683668 | A1 | |
| | | | | | CN | 111461096 | A | |
| WO | 2019/097918 | | A1 | 23 May 2019 | US | 2021/0165220 | A1 | |
| | | | | | entire text, all drawings | | | |
| | | | | | CN | 111433067 | A | |
| JP | 2006-088722 | | A | 06 April 2006 | (Family: none) | | | |
| JP | 2011-070074 | | A | 07 April 2011 | US | 2011/0074657 | A1 | |
| | | | | | entire text, all drawings | | | |
| | | | | | CN | 102033318 | A | |
| WO | 2017/013739 | | A1 | 26 January 2017 | US | 2018/0118224 | A1 | |
| | | | | | entire text, all drawings | | | |
| | | | | | CN | 107848415 | A | |
| US | 2020/0073120 | | A1 | 05 March 2020 | WO | 2018/104062 | A1 | |
| | | | | | EP | 3548954 | A1 | |

Form PCT/ISA/210 (patent family annex) (January 2015)

**REFERENCES CITED IN THE DESCRIPTION**

**Patent documents cited in the description**

- JP 2001042251 A

- JP 2006044596 A